(19) Europäisches Patentamt
European Patent Office
Office européen des brevets

(11) **EP 4 693 445 A1**

(12) **EUROPEAN PATENT APPLICATION**
published in accordance with Art. 153(4) EPC

(43) Date of publication:
**11.02.2026   Bulletin 2026/07**

(21) Application number: **24895432.3**

(22) Date of filing: **15.05.2024**

(51) International Patent Classification (IPC):
*H01M 4/133* (2010.01)     *H01M 4/134* (2010.01)
*H01M 4/36* (2006.01)

(52) Cooperative Patent Classification (CPC):
H01M 4/133; H01M 4/134; H01M 4/36;
H01M 10/0525; Y02E 60/10

(86) International application number:
**PCT/CN2024/093391**

(87) International publication number:
**WO 2025/112321 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   30.11.2023   CN 202311640889

(71) Applicant: **Contemporary Amperex Technology
Co., Limited
Ningde, Fujian 352100 (CN)**

(72) Inventors:
• **CHEN, Wenqiang**
 **Ningde, Fujian 352100 (CN)**
• **WANG, Jiazheng**
 **Ningde, Fujian 352100 (CN)**
• **GUO, Xiaoxin**
 **Ningde, Fujian 352100 (CN)**
• **LV, Zijian**
 **Ningde, Fujian 352100 (CN)**

(74) Representative: **Jacob, Reuben Ellis et al
Maucher Jenkins
Seventh Floor Offices
Artillery House
11-19 Artillery Row
London SW1P 1RT (GB)**

(54) **NEGATIVE ELECTRODE SHEET, SECONDARY BATTERY, AND ELECTRIC DEVICE**

(57)     A negative electrode sheet (10), a secondary battery (5), and an electric device. The negative electrode sheet (10) comprises a negative electrode current collector (101) and a negative electrode film layer (102) formed on at least one surface of the negative electrode current collector (101); the negative electrode film layer (102) has a first surface (102a) away from the negative electrode current collector (101) and a second surface (102b) opposite to the first surface (102a); the thickness of the negative electrode film layer (102) is denoted as H; the region within the thickness range from the first surface (102a) to 0.3 H of the negative electrode film layer (102) is denoted as a first region (1022) of the negative electrode film layer (102); the region within the thickness range from the second surface (102b) to 0.3 H of the negative electrode film layer (102) is denoted as a second region (1021) of the negative electrode film layer (102); the first region (1022) comprises a spherical or/and spheroid first silicon-based material. The negative electrode sheet (10) can reduce its own expansion rate and improve the cycle stability and storage performance of the battery.

FIG. 3

## Description

### CROSS-REFERENCE TO RELATED APPLICATIONS

The present application claims priority to Chinese Patent Application No. 202311640889.5, filed on November 30, 2023 and entitled "NEGATIVE ELECTRODE PLATE, SECONDARY BATTERY, AND POWER CONSUMING APPARATUS", which is incorporated herein by reference in its entirety.

### TECHNICAL FIELD

The present application relates to the technical field of a secondary battery, and in particular, to a negative electrode plate, a secondary battery, and a power consuming apparatus.

### BACKGROUND

In recent years, secondary batteries have been widely applied to energy storage power systems of hydropower, thermal power, wind power, and solar power stations, and various fields such as electric power tools, electric bicycles, electric motorcycles, electric vehicles, military equipment, and aerospace.

A silicon-based negative electrode active material is an effective path to improve the capacity of the secondary battery. However, a negative electrode plate including the silicon-based material has the defects of high expansion rate of the electrode plate, and poor cycle life and poor high-temperature storage performance of the battery. Therefore, the negative electrode plate including the silicon-based material in the prior art still needs to be improved.

### SUMMARY

The present application is made in view of the above subject, and aims to provide a negative electrode plate. The negative electrode plate can reduce its own expansion rate and improve the cycle stability and high-temperature storage performance of the battery.

According to a first aspect of the present application, a negative electrode plate is provided, and includes a negative electrode current collector and a negative electrode film layer formed on at least one surface of the negative electrode current collector. The negative electrode film layer has a first surface away from the negative electrode current collector and a second surface opposite to the first surface. A thickness of the negative electrode film layer is denoted as H. A region within the thickness range from the first surface to 0.3 H of the negative electrode film layer is denoted as a first region of the negative electrode film layer. A region within the thickness range from the second surface to 0.3 H of the negative electrode film layer is denoted as a second region of the negative electrode film layer. The first region includes a spherical or/and spheroidal first silicon-based material.

Mainstream negative electrode active materials of lithium-ion batteries at present are mainly artificial graphite or natural graphite, but the theoretical specific capacity of a silicon material is much higher than that of graphite. By using the silicon-based material as the negative electrode active material, the energy density of the secondary battery can be improved. The first region in direct contact with a cold pressing roller and an electrolyte solution includes a spherical or/and spheroidal silicon-based material. A compaction density window of the electrode plate can be expanded. The cold pressing pressure required at the same compaction density is smaller. The cracking probability of the silicon-based material in the cold pressing process is reduced. The completeness of silicon-based material particles is favorably maintained. The generation of a new interface is reduced. Irreversible active ion consumption caused by contact of active silicon exposed from the silicon-based material with the electrolyte solution in a cycle process is avoided. In addition, the silicon-based material is a spherical or/and spheroidal silicon-based material. The stress concentration of the silicon-based material during rolling or expansion can be reduced. A cracking phenomenon of the silicon-based material is further retarded. Therefore, the expansion rate of the electrode plate is comprehensively reduced, and the storage performance and cycle stability of the battery are improved.

In any of embodiments, the second region includes a second silicon-based material, and an average particle size of the second silicon-based material is smaller than an average particle size of the first silicon-based material.

The first region of the negative electrode plate in direct contact with the electrolyte solution uses the first silicon-based material with the large average particle size, and the specific surface area of the first silicon-based material can be reduced, so that the active ion loss caused by a reaction after the direct contact between the silicon-based material and the electrolyte solution is reduced, the expansion rate of the electrode plate is reduced, and the storage performance and cycle stability of the battery are improved. The second region of the negative electrode plate near the current collector uses the second silicon-based material with the small average particle size, a short solid-phase ion transmission distance is realized, and the transmission performance of the active ions and electrons is favorably improved, so that the fast charging performance of the battery is improved. In addition, the second silicon-based material with the small average particle size has a greater specific surface area, and the mutual action between a binder and the silicon-based material is enhanced, so that the expansion of the electrode plate is further reduced, and the storage performance and cycle stability of the battery are improved.

In any of embodiments, a percentage of the mass of a silicon element in the first silicon-based material relative to the total mass of the first silicon-based material is smaller than a percentage of the mass of a silicon element in the second silicon-based material relative to the total mass of the second silicon-based material.

The content of the silicon element in the first silicon-based material in the first region in direct contact with the cold pressing roller and the electrolyte solution is low, and the content of the silicon in contact with the electrolyte solution when the silicon-based material cracks can be reduced, so that the expansion of the electrode plate is retarded, and the cycle stability and storage performance of the battery are improved. The second silicon-based material with the high silicon content and the first silicon-based material with the low silicon content are used in a combined manner, so the battery may favorably achieve the low expansion rate, good cycle stability, and high energy density at the same time.

In any of embodiments, a specific surface area of the first silicon-based material is smaller than a specific surface area of the second silicon-based material.

The first silicon-based material has a smaller specific surface area, which can reduce the active ion loss caused by a reaction between the silicon-based material and the electrolyte solution, so that the expansion of the electrode plate is retarded, and the cycle stability and storage performance of the battery are improved. The second silicon-based material has a larger specific surface area, which can enhance the mutual action between the binder and the silicon-based material, so that the expansion of the electrode plate is reduced. The first silicon-based material and the second silicon-based material are used in a combined manner, and the battery can favorably achieve the low expansion rate, excellent cycle stability, and excellent storage performance at the same time.

In any of embodiments, the crystallinity of the first silicon-based material is smaller than the crystallinity of the second silicon-based material.

An amorphous silicon-based material has higher cycle stability than the crystalline silicon-based material, and the first silicon-based material having the lower crystallinity is favorable for improving the cycle stability of the battery.

In any of embodiments, the first silicon-based material is subjected to a constant current charging and discharging test by using a button battery. A differential capacity curve at a delithiation stage is drawn to reflect a relationship between dQ/dV and a voltage V. According to a specification, a maximum value of a differential value dQ/dV between 0.27 V and 0.34 V is denoted as V1. A maximum value of a differential value dQ/dV between 0.43 V and 0.55 V is denoted as V2. $1.55 \leq V1/V2 \leq 1.75$, and optionally, $1.60 \leq V1/V2 \leq 1.72$.

When V1/V2 of the first silicon-based material is within the above range, a high-voltage platform cannot easily occur, and it is favorable for maintaining structure stability of the silicon-based material and improving the cycle stability of the battery.

In any of embodiments, the first silicon-based material and/or the second silicon-based material include/includes a silicon-carbon material. The silicon-carbon material includes carbon matrix particles having pore structures, and a nanometer silicon-based material arranged in the pore structures.

When the silicon-carbon material is of a structure including the carbon matrix particles having pore structures and the nanometer silicon-based material arranged in the pore structures, the carbon matrix particles having the pore structures have a certain inhibition effect on the expansion of the nanometer silicon-based material occurring in the cycle process, so that the structure stability of the silicon-carbon material is improved, the battery capacity is improved, and the excellent storage performance and cycle stability are realized at the same time.

In any of embodiments, Dv50 of the first silicon-based material is 9 $\mu$m to 11 $\mu$m, and is optionally 9.5 $\mu$m to 10 $\mu$m.

When Dv50 of the first silicon-based material meets the above range, the active ion loss caused by a reaction after the direct contact between the silicon-based material and the electrolyte solution is reduced, the expansion of the electrode plate is reduced, and the storage performance and cycle stability of the battery are improved.

In any of embodiments, the percentage of the mass of the silicon element in the first silicon-based material relative to the total mass of the first silicon-based material is 40% to 60%, and is optionally 45% to 50%.

When the mas percentage of the silicon element in the first silicon-based material is within the above range, the content of the silicon in contact with the electrolyte solution when the silicon-based material cracks can be reduced, the expansion of the electrode plate is retarded, the completeness of the silicon-based material particles is favorably maintained, the battery is enabled to have excellent capacity, and at the same time, the cycle stability of the battery is improved.

In any of embodiments, the specific surface area of the first silicon-based material is 0.8 $m^2$/g to 5 $m^2$/g, and is optionally 1.1 $m^2$/g to 3.2 $m^2$/g.

When the specific surface area of the first silicon-based material is within the above range, the active ion loss caused by a reaction between the silicon-based material and the electrolyte solution can be reduced, the expansion of the electrode plate is reduced, and the cycle stability and storage performance of the battery are improved.

In any of embodiments, the second silicon-based material has a blocky appearance.

The second silicon-based material has a blocky appearance, so the battery has the excellent performance, and at the same time, the manufacturing cost of the electrode plate can be reduced.

In any of embodiments, Dv50 of the second silicon-based material is 5 $\mu$m to 6 $\mu$m, and is optionally 5.2 $\mu$m to 5.6 $\mu$m.

When Dv50 of the second silicon-based material is within the above range, the transmission performance of the active ions and electrons is favorably improved, so that the fast charging performance of the battery is improved.

In any of embodiments, the percentage of the mass of the silicon element in the second silicon-based material relative to the total mass of the second silicon-based material is 45% to 65%, and is optionally 47% to 55%.

When the mass percentage of the silicon element in the second silicon-based material is within the above range, the capacity of the battery is favorably improved.

In any of embodiments, the specific surface area of the second silicon-based material is greater than or equal to 0.8 m$^2$/g, and is optionally 1.1 m$^2$/g to 3.2 m$^2$/g.

When the specific surface area of the second silicon-based material is within the above range, the mutual action between the binder and the silicon-based material can be enhanced, so that the expansion of the electrode plate is reduced.

In any of embodiments, the second silicon-based material includes silicon crystalline grains, and the crystalline grain size of the silicon crystalline grains is smaller than or equal to 5 nm, and is optionally 2 nm to 3 nm.

The size of the silicon crystalline grains is within the above range, which can avoid the condition of deteriorating the storage performance and cycle stability of the battery caused by larger expansion during lithium intercalation due to excessive local enrichment of the silicon element because of too large size of the crystalline grains. The first silicon-based material and the second silicon-based material are used in a combined manner, so that the deterioration of the battery performance caused by the fact that silicon is easily enriched on the surface of the second silicon-based material with the small particle size to generate crystallization can be retarded.

In any of embodiments, the second silicon-based material is subjected to a constant current charging and discharging test by using a button battery. A differential capacity curve at a delithiation stage is drawn to reflect a relationship between dQ/dV and a voltage V. According to the specification, a maximum value of a differential value dQ/dV between 0.27 V and 0.34 V is denoted as VA. A maximum value of a differential value dQ/dV between 0.43 V and 0.55 V is denoted as VB. 0.8$\leq$VA/VB$\leq$1.3, and optionally, 0.8$\leq$VA/VB$\leq$1.0.

Silicon is easily enriched on the surface of the silicon-based material with the smaller particle size to generate crystallization, and a high-voltage platform is generated. The first silicon-based material and the second silicon-based material are used in a combined manner, so that the deterioration of the structure stability of the material caused by the high-voltage platform generated by the second silicon-based material can be retarded, and the storage performance and cycle stability of the battery are improved.

In any of embodiments, a first carbon material is further included in the first region, and Dv50 of the first carbon material is 14 $\mu$m to 19 $\mu$m.

In any of embodiments, a second carbon material is further included in the second region, and the first carbon material and/or the second carbon material include/includes at least one of artificial graphite, natural graphite, soft carbon, and hard carbon.

In any of embodiments, the first carbon material includes artificial graphite.

Compared with natural graphite, the artificial graphite can improve the compaction density of the electrode plate, and has excellent cycle stability and storage performance, so that the expansion of the electrode plate is reduced, and the cycle stability and storage performance of the battery are improved.

In any of embodiments, the mass proportion of the first silicon-based material in the negative electrode film layer in the first region is smaller than the mass proportion of the second silicon-based material in the negative electrode film layer in the second region.

The proportion of the first silicon-based material in the first region in direct contact with the cold pressing roller and the electrolyte solution is low, and the content of the silicon in contact with the electrolyte solution when the silicon-based material cracks can be further reduced, so that the expansion of the electrode plate can be retarded, and the cycle stability and storage performance of the battery are improved.

According to a second aspect of the present application, a secondary battery is provided, and includes the negative electrode plate according to the first aspect.

According to a third aspect of the present application, a power consuming apparatus is further provided, and includes the secondary battery according to the second aspect.

## BRIEF DESCRIPTION OF THE DRAWINGS

FIG. 1 is a schematic view of an embodiment of a negative electrode plate of the present application;

FIG. 2 is a scanning electron microscope picture of a first silicon-based material according to an embodiment of the present application;

FIG. 3 is a scanning electron microscope picture of a cross section of a first region of a negative electrode film layer according to an embodiment of the present application;

FIG. 4 is a scanning electron microscope picture of a cross section of a second region of a negative electrode film layer according to an embodiment of the present application;

FIG. 5 is an X-ray diffraction pattern of a first silicon-based material according to an embodiment of the present application;

FIG. 6 is an X-ray diffraction pattern of a second silicon-based material according to an embodiment of the present application;

FIG. 7 is a dQ/dV-V curve of a first silicon-based material according to an embodiment of the present application;

FIG. 8 is a dQ/dV-V curve of a second silicon-based material according to an embodiment of the present application;

FIG. 9 is a schematic view of a secondary battery according to an embodiment of the present application;

FIG. 10 is an exploded view of the secondary battery according to an embodiment of the present application shown in FIG. 9;

FIG. 11 is a schematic view of a battery module according to an embodiment of the present application;

FIG. 12 is a schematic view of a battery pack according to an embodiment of the present application;

FIG. 13 is an exploded view of the battery pack according to an embodiment of the present application shown in FIG. 12; and

FIG. 14 is a schematic view of a power consuming apparatus using a secondary battery according to an embodiment of the present application as a power supply.

In the figures,

1 denotes a battery pack, 2 denotes an upper box body, 3 denotes a lower box body, 4 denotes a battery module, 5 denotes a secondary battery, 51 denotes a case, 52 denotes an electrode assembly, 53 denotes a cover plate, 10 denotes a negative electrode plate, 101 denotes a negative electrode current collector, 102 denotes a negative electrode film layer, 102a denotes a first surface, 102b denotes a second surface, 1021 denotes a second region, 1022 denotes a first region, and 1023 denotes a middle region.

## DETAILED DESCRIPTION

The embodiments of a negative electrode plate, a secondary battery, and a power consuming apparatus of the present application are specifically illustrated and disclosed in detail with reference to the accompanying drawings properly hereafter. However, there will be cases where unnecessary detailed descriptions are omitted. For example, there are cases where detailed descriptions of well-known matters and repeated descriptions of actually identical structures are omitted. This is to avoid unnecessary redundancy in the following descriptions and to facilitate the understanding by those skilled in the art. In addition, the accompanying drawings and following descriptions are provided for those skilled in the art to fully understand the present application, and are not intended to limit the subject matter recited in the claims.

The "range" disclosed in the present application is defined in a form of a lower limit and an upper limit, a given range is defined by selecting a lower limit and an upper limit, and the selected lower limit and upper limit define boundaries of a particular range. A range defined in this manner may be inclusive or exclusive of end values, and any combination is available, meaning that any lower limit may be combined with any upper limit to form a range. For example, if ranges of 60 to 120 and 80 to 110 are listed for a particular parameter, it is to be understood that ranges of 60 to 110 and 80 to 120 are also expected. Additionally, if minimum range values 1 and 2 are listed and maximum range values 3, 4 and 5 are listed, the following ranges may all be expected: 1 to 3, 1 to 4, 1 to 5, 2 to 3, 2 to 4, and 2 to 5. In the present application, unless otherwise specified, a numerical range "a to b" represents an abbreviated representation of any combination of real numbers between a and b, where both a and b are real numbers. For example, a numerical range "0 to 5" represents that all real numbers between 0 and 5 are listed herein, and "0 to 5" is merely the abbreviated representation of the combination of these numbers. In addition, when a parameter is expressed as an integer $\geq 2$, it is equivalent to disclosing that the parameter is, for example, an integer of 2, 3, 4, 5, 6, 7, 8, 9, 10, 11, 12, etc.

Unless otherwise specified, all the embodiments and optional embodiments of the present application may be combined with each other to form new technical solutions.

Unless otherwise specified, all technical features and optional technical features of the present application may be combined with each other to form new technical solutions.

Unless otherwise specified, all steps in the present application may be performed in order or may be performed in a random order, and are preferably performed in order. For example, the method including steps (a) and (b) represents that the method may include steps (a) and (b) performed sequentially, or may include steps (b) and (a) performed sequentially. For example, the expression that the method may further include step (c) represents that step (c) may be added to the method in any order, for example, the method may include steps (a), (b), and (c), or steps (a), (c), and (b), or steps (c), (a) and (b), etc.

Unless otherwise specified, "comprise" and "include" mentioned in the present application represent open inclusion or closed inclusion. For example, the "comprise" and "include" may represent that other components not listed may further be comprised or included, or only listed components may be comprised or included.

Unless otherwise specified, in the present application, the term "or" is inclusive. For example, the phrase "A or B" represents "A, B, or both A and B". More specifically, any one of the following conditions satisfies the condition "A or B": A is true (or presents), and B is false (or does not present); A is false (or does not present), and B is true (or presents); or both A and B are true (or present).

It is a study hotspot of improving the energy density of a battery in the field of a lithium-ion battery. Silicon has the theoretical gram capacity reaching 4200 mAh/g, is a negative electrode material of the lithium-ion battery having a highest specific capacity at present, has abundant reserve volume and low price, and has been widely researched for improving the energy density of the battery in recent years. A lithium storage mechanism of the silicon negative electrode material mainly includes forming an alloy phase with lithium ions. During practical application, it is found that after lithiation, the volume of the lithium negative electrode material greatly expands, so the stress inside a battery is great, and the silicon negative electrode material is continuously extruded and pressed to crack. In addition, a part of the silicon negative electrode material may also crack in a compaction process of the electrode plate, and the silicon exposed to the electrolyte solution may continuously consume lithium ions in the electrolyte solution, so that the deterioration of the storage performance and cycle stability of the battery are caused.

[Negative electrode plate]

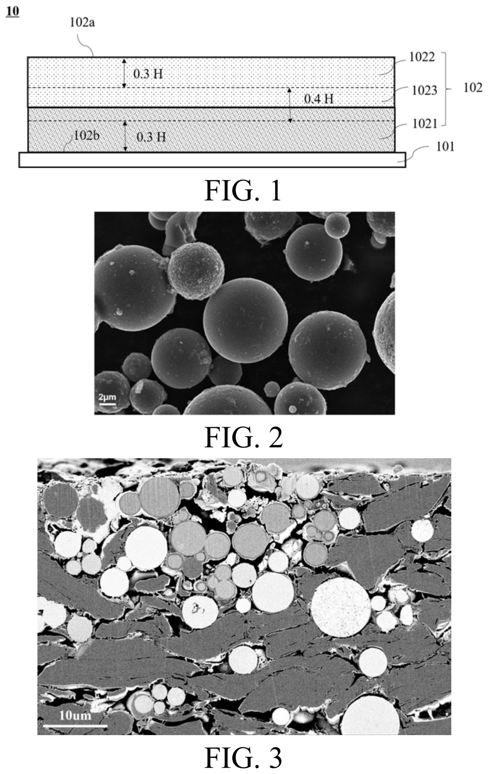

Based on the above, the present application provides a negative electrode plate. As shown in FIG. 1, the negative electrode plate 10 includes a negative electrode current collector 101 and a negative electrode film layer 102 formed on at least one surface of the negative electrode current collector 101. The negative electrode film layer 102 has a first surface 102a away from the negative electrode current collector 101 and a second surface 102b opposite to the first surface 102a. A thickness of the negative electrode film layer 102 is denoted as H. A region within the thickness range from the first surface 102a to 0.3 H of the negative electrode film layer 102 is denoted as a first region 1022 of the negative electrode film layer. A region within the thickness range from the second surface 102b to 0.3 H of the negative electrode film layer 102 is denoted as a second region 1021 of the negative electrode film layer. The first region 1022 includes a spherical or/and spheroidal first silicon-based material.

In the present application, a method for determining a spherical shape or a spheroidal shape may use a known method in the art for test. As an example, the silicon-based material may be shot to be observed by using a scanning electron microscope. FIG. 2 is a scanning electron microscope picture of a sample of the spherical silicon-based material. As shown in FIG. 2, it can be obviously seen that the silicon-based material is of a spherical shape. Alternatively, the electrode plate is cut to expose the cross section by an argon ion beam in a manner of being perpendicular to the main surface of the electrode plate. The cross section is shot to be observed by using the scanning electron microscope. A scanning electron microscope picture of the first region of the negative electrode film layer is as shown in FIG. 3. The spherical or spheroidal silicon-based material may be observed in the first region of the negative electrode film layer.

In this specification, the "silicon-based material" refers to at least one of elemental silicon, a silicon oxide, a silicon-carbon composite, a silicon-nitrogen composite, and silicon alloy.

Mainstream negative electrode active materials of lithium-ion batteries at present are mainly artificial graphite or natural graphite, but the theoretical specific capacity of a silicon material is much higher than that of graphite. By using the silicon-based material as the negative electrode active material, the energy density of the secondary battery can be improved. The first region in direct contact with a cold pressing roller and an electrolyte solution includes a spherical or/and spheroidal silicon-based material. A compaction density window of the electrode plate can be expanded. The cold pressing pressure required at the same compaction density is smaller. The cracking probability of the silicon-based material in the cold pressing process is reduced. The completeness of silicon-based material particles is favorably maintained. The generation of a new interface is reduced. Irreversible active ion consumption caused by contact of active silicon exposed from the silicon-based material with the electrolyte solution in a cycle process is avoided. In addition, the silicon-based material is a spherical or/and spheroidal silicon-based material. The stress concentration of the silicon-based material during rolling or expansion can be reduced. A cracking phenomenon of the silicon-based material is further retarded. Therefore, the expansion rate of the electrode plate is comprehensively reduced, and the storage performance and cycle stability of the battery are improved.

In some embodiments, the second region includes a second silicon-based material, and an average particle size of the second silicon-based material is smaller than an average particle size of the first silicon-based material.

In the present application, the average particle size may be tested by using a method known in the art. As an example, the electrode plate is cut to expose the cross section by an argon ion beam in a manner of being perpendicular to the main surface of the electrode plate. The cross section is shot by using the scanning electron microscope. The statistical analysis is performed on the particle size of the silicon-based material of the first region and the second region by using a long diameter statistics method. The average particle size is obtained by dividing the total particle size by the total particle quantity.

The first region of the negative electrode plate in direct contact with the electrolyte solution uses the first silicon-based material with the large average particle size, and the specific surface area of the first silicon-based material can be reduced, so that the active ion loss caused by a reaction after the direct contact between the silicon-based material and the electrolyte solution is reduced, the expansion rate of the electrode plate is reduced, and the storage performance and cycle stability of the battery are improved. The second region of the negative electrode plate near the current collector uses the second silicon-based material with the small average particle size, a short solid-phase ion transmission distance is realized, and the transmission performance of the active ions and electrons is favorably improved, so that the fast charging performance of the battery is improved. In addition, the second silicon-based material with the small average particle size has a greater specific surface area, and the mutual action between a binder and the silicon-based material is enhanced, so that the expansion of the electrode plate is further reduced, and the storage performance and cycle stability of the battery are improved.

In some embodiments, a percentage of the mass of a silicon element in the first silicon-based material relative to the total mass of the first silicon-based material is smaller than a percentage of the mass of a silicon element in the second silicon-based material relative to the total mass of the second silicon-based material.

In the present application, the mass percentage of the silicon element may be tested by a method known in the art. As an example, an ICP (Inductively Coupled Plasma) emission spectrum test may be adopted to determine the content of the silicon element. The specific steps are as follows: a silicon-based material is taken to be used as a sample, the sample is dissolved and digested by using aqua regia and HF (hydrofluoric acid), and the completely dissolved and digested (dissolution and digestion for 0.5 h) solution is taken to be subjected to ICP test to obtain the mass percentage of the silicon element of the silicon-based material.

The content of the silicon element in the first silicon-based material in the first region in direct contact with the cold pressing roller and the electrolyte solution is low, and the content of the silicon in contact with the electrolyte solution when the silicon-based material cracks can be reduced, so that the expansion of the electrode plate is retarded, and the cycle stability and storage performance of the battery are improved. The second silicon-based material with the high silicon content and the first silicon-based material with the low silicon content are used in a combined manner, so the battery may favorably achieve the low expansion rate, good cycle stability, and high energy density at the same time.

In some embodiments, a specific surface area of the first silicon-based material is smaller than a specific surface area of the second silicon-based material.

In the present application, the specific surface area may be tested by a method known in the art. As an example, the specific surface area is tested by a gas adsorption method. The test is performed according to a test standard GB/T19587-2017. Specific steps are as follows: a silicon-based material is taken to be used as a sample, a sample tube is immersed in -196°C liquid nitrogen, the adsorption quantity of the nitrogen gas on the solid surface at different pressures is tested at a relative pressure of 0.05 to 0.30, and the monomolecular layer adsorption quantity of the sample is solved based on a BET multi-layer adsorption theory and its formula, so that the specific surface area of the solid is calculated.

$$\frac{p/p_0}{n_a(1-\frac{p}{p_0})} = \frac{1}{n_m C} + \frac{C-1}{n_m C} \times \frac{p}{p_0}$$

In the formula, $n_a$ is the quantity of the adsorbed gas, and the unit is mol/g; $p/p_0$ is the relative pressure; and $n_m$ is the monomolecular layer adsorption quantity.

The first silicon-based material has a smaller specific surface area, which can reduce the active ion loss caused by a reaction between the silicon-based material and the electrolyte solution, so that the expansion of the electrode plate is retarded, and the cycle stability and storage performance of the battery are improved. The second silicon-based material has a larger specific surface area, which can enhance the mutual action between the binder and the silicon-based material, so that the expansion of the electrode plate is reduced. The first silicon-based material and the second silicon-based material are used in a combined manner, and the battery can favorably achieve the low expansion rate, excellent cycle stability, and excellent storage performance at the same time.

In some embodiments, the crystallinity of the first silicon-based material is smaller than that of the second silicon-based material.

In the present application, the crystallinity may be tested by a method known in the art. As an example, the crystallinity of the silicon-based material is tested by using an X-ray diffractometer (D8 DISCOVER of Bruker company). If no crystalline diffraction peak occurs in the X-ray diffraction pattern, the material is determined to be of a non-crystalline structure. If a sharp diffraction peak occurs in the X-ray diffraction pattern, the material is determined to be of a crystalline structure. The crystallinity of the material is determined based on the diffraction peak intensity corresponding to the angle and the full width at half maximum of the diffraction peak. The higher diffraction peak and smaller full width at half maximum indicate the greater crystallinity.

An amorphous silicon-based material has higher cycle stability than the crystalline silicon-based material, and the first silicon-based material having the lower crystallinity is favorable for improving the cycle stability of the battery.

In some embodiments, the first silicon-based material is subjected to a constant current charging and discharging test by using a button battery. A differential capacity curve at a delithiation stage is drawn to reflect a relationship between dQ/dV and a voltage V. According to the specification, a maximum value of a differential value dQ/dV between 0.27 V and 0.34 V is denoted as V1. A maximum value of a differential value dQ/dV between 0.43 V and 0.55 V is denoted as V2. $1.55 \leq V1/V2 \leq 1.75$. In some embodiments, $1.60 \leq V1/V2 \leq 1.72$.

In this specification, the term "differential capacity curve" refers to a dQ/dV curve, is an effective tool for analyzing the battery state inside the battery, and is a method capable of obtaining an internal parameter and the state of the battery without dismounting the battery. The dQ/dV curve is a dQ/dV-V curve obtained by calculating the capacity change of the battery within a constant voltage interval.

In the present application, the dQ/dV curve may be tested by using a method known in the art. As an example, the negative electrode material is mixed according to a ratio of an active material, a binder to conductive carbon of 8:1:1. Slurry is coated onto a copper foil to be prepared into a test electrode plate. A lithium metal is used for an electrode. 0.05 C constant current discharging is performed to reach 5 mV. 5 mV constant voltage discharging is performed until the current is smaller than 50 $\mu$m. 0.1 C constant current charging is performed to reach 1.5 V. A constant current charging curve of a button battery is obtained. The 0.1 C constant current charging curve is subjected to differential capacity processing. The volume change in the constant voltage interval is calculated to obtain the dQ/dV-V curve.

In some embodiments, a value of V1/V2 is any one of 1.55, 1.60, 1.65, 1.7, 1.72, or 1.75, or within a range formed by any two of the above values.

When V1/V2 of the first silicon-based material is within the above range, a high-voltage platform cannot easily occur, and it is favorable for maintaining structure stability of the silicon-based material and improving the cycle stability of the battery.

In some embodiments, the first silicon-based material and/or the second silicon-based material include/includes a silicon-carbon material. The silicon-carbon material includes carbon matrix particles having pore structures, and a nanometer silicon-based material arranged in the pore structures.

In this specification, the term "silicon-carbon material" refers to a material formed by two elements: silicon and carbon.

When the silicon-carbon material is of a structure including the carbon matrix particles having pore structures and the nanometer silicon-based material arranged in the pore structures, the carbon matrix particles having the pore structures have a certain inhibition effect on the expansion of the nanometer silicon-based material occurring in the cycle process, so that the structure stability of the silicon-carbon material is improved, the battery capacity is improved, and the excellent storage performance and excellent cycle stability are realized at the same time.

In some embodiments, the average pore size of the pore structures of the carbon matrix particles is 1.3 nm to 3.2 nm. In some embodiments, the average pore size of the pore structures of the carbon matrix particles is 1.6 nm to 2.4 nm.

In some embodiments, the average pore size of the pore structures of the carbon matrix particles is any one of 1.3 nm, 1.5 nm, 1.7 nm, 1.9 nm, 2.1 nm, 2.3 nm, 2.5 nm, 2.7 nm, 2.9 nm, or 3.2 nm, or within a range formed by any two of the above values.

The pores in this pore size range are favorable for the attachment of the nanometer silicon-based material, in addition, expansion limitation may be effectively realized on the nanometer silicon-based material in the pores, and the expanded silicon nanometer particles basically cannot cause the damage to the porous carbon matrix particle structures, so that the structure stability of the silicon-carbon material is ensured, the expansion of the electrode plate is reduced, and at the same time, the battery has the excellent storage performance and cycle stability.

In some embodiments, the porosity of the carbon matrix particles is 70% to 89%. In some are embodiments, the porosity of the carbon matrix particles is 78% to 84%.

In some embodiments, the porosity of the carbon matrix particles is any one of 70%, 73%, 76%, 79%, 82%, 85%, or 89%, or within a range formed by any two of the above values.

When the porosity of the carbon matrix particles is within the above range, the pores occupy a relatively great volume of the carbon matrix particles, the carbon matrix particles and the nanometer silicon-based material may take an effect in a cooperative manner, the battery capacity is improved, at the same time, the electrode plate has low expansion, and the battery has excellent storage performance and cycle stability.

In some embodiments, the carbon matrix particles include hard carbon.

In some embodiments, a method for preparing the silicon-carbon material includes the steps: a gas including silicon precursors is provided to the carbon matrix particles having pore structures; and through chemical vapor deposition, the nanometer silicon-based material arranged in the pore structures is generated through the silicon precursors, and the carbon-silicon material is obtained.

In some embodiments, the silicon precursors are silane.

In some embodiments, a method for preparing the first silicon-based material includes the steps: a gas including silicon precursors is provided to the spherical and/or spheroidal carbon matrix particles having pore structures; and through chemical vapor deposition, the nanometer silicon-based material arranged in the pore structures is generated through the silicon precursors, and the spherical and/or spheroidal carbon-silicon material is obtained.

In some embodiments, Dv50 of the first silicon-based material is 9 $\mu$m to 11 $\mu$m. In some embodiments, Dv50 of the first silicon-based material is 9.5 $\mu$m to 10 $\mu$m.

In this specification, the term "Dv50" refers to a particle size when the volume distribution percentage reaches 50%.

In the present application, Dv50 may be tested by a method known in the art. As an example, with reference to GB/T 19077-2016 Particle Size Analysis-Laser Diffraction Methods, determination is conveniently performed by using a laser particle size analysis instrument, such as a Mastersizer 2000E type laser particle size analysis instrument of Malvern Instruments Co., Ltd, UK.

In some embodiments, Dv50 of the first silicon-based material is any one of 9 $\mu$m, 9.5 $\mu$m, 10 $\mu$m, 10.5 $\mu$m, or 11 $\mu$m, or within a range formed by any two of the above values.

When Dv50 of the first silicon-based material meets the above range, the active ion loss caused by a reaction after the direct contact between the silicon-based material and the electrolyte solution is reduced, the expansion of the electrode plate is reduced, and the storage performance and cycle stability of the battery are improved.

In some embodiments, the percentage of the mass of the silicon element in the first silicon-based material relative to the total mass of the first silicon-based material is 40% to 60%. In some embodiments, the percentage of the mass of the silicon element in the first silicon-based material relative to the total mass of the first silicon-based material is 45% to 50%.

In some embodiments, the percentage of the mass of the silicon element in the first silicon-based material relative to the total mass of the first silicon-based material is any one of 40%, 45%, 50%, 55%, or 60%, or within a range formed by any two of the above values.

When the mas percentage of the silicon element in the first silicon-based material is within the above range, the content of the silicon in contact with the electrolyte solution when the silicon-based material cracks can be reduced, the expansion of the electrode plate is retarded, the completeness of the silicon-based material particles is favorably maintained, the battery is enabled to have excellent capacity, and at the same time, the cycle stability of the battery is improved.

In some embodiments, the specific surface area of the first silicon-based material is 0.8 m$^2$/g to 5 m$^2$/g. In some embodiments, the specific surface area of the first silicon-based material is 1.1 m$^2$/g to 3.2 m$^2$/g.

In some embodiments, the specific surface area of the first silicon-based material is any one of 0.8 m$^2$/g, 1.4 m$^2$/g, 1.8 m$^2$/g, 2.2 m$^2$/g, 2.6 m$^2$/g, 3 m$^2$/g, 3.4 m$^2$/g, 3.8 m$^2$/g, 4.2 m$^2$/g, 4.6 m$^2$/g, or 5 m$^2$/g, or within a range formed by any two of the above values.

When the specific surface area of the first silicon-based material is within the above range, the active ion loss caused by a reaction between the silicon-based material and the electrolyte solution can be reduced, the expansion of the electrode plate is reduced, and the cycle stability and storage performance of the battery are improved.

In some embodiments, the second silicon-based material has a blocky appearance.

In this specification, the term "blocky appearance" refers to a shape different from the spherical or spheroidal shape.

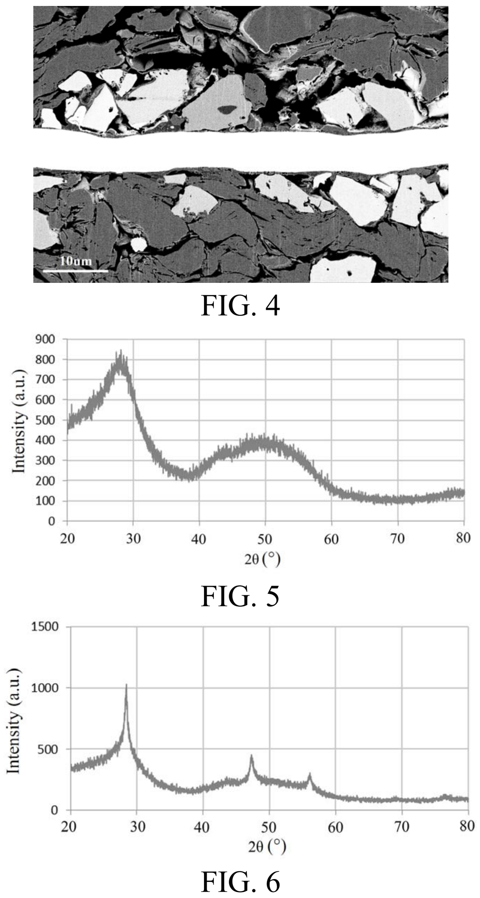

The electrode plate is cut to expose the cross section by an argon ion beam in a manner of being perpendicular to the main surface of the electrode plate. The cross section is shot to be observed by using the scanning electron microscope. A scanning electron microscope picture of the second region of the negative electrode film layer is as shown in FIG. 4. The blocky silicon-based material may be observed in the second region of the negative electrode film layer.

The second silicon-based material has a blocky appearance, so the battery has the excellent performance, and at the same time, the manufacturing cost of the electrode plate can be reduced.

In some embodiments, a method for preparing the second silicon-based material includes the steps: a gas including silicon precursors is provided to blocky carbon matrix particles having carbon skeletons; and through chemical vapor deposition, the nanometer silicon-based material attached onto the carbon skeletons is generated through the silicon precursors, and the blocky carbon-silicon material is obtained.

In some embodiments, Dv50 of the second silicon-based material is 5 $\mu$m to 6 $\mu$m. In some embodiments, Dv50 of the second silicon-based material is 5.2 $\mu$m to 5.6 $\mu$m.

In some embodiments, Dv50 of the second silicon-based material is any one of 5 $\mu$m, 5.1 $\mu$m, 5.2 $\mu$m, 5.3 $\mu$m, 5.4 $\mu$m, 5.5 $\mu$m, 5.6 $\mu$m, 5.7 $\mu$m, 5.8 $\mu$m, 5.9 $\mu$m, or 6 $\mu$m, or within a range formed by any two of the above values.

When Dv50 of the second silicon-based material is within the above range, the transmission performance of the active ions and electrons is favorably improved, so that the fast charging performance of the battery is improved.

In some embodiments, the percentage of the mass of the silicon element in the second silicon-based material relative to the total mass of the second silicon-based material is 45% to 65%. In some embodiments, the percentage of the mass of the silicon element in the second silicon-based material relative to the total mass of the second silicon-based material is 47% to 55%.

In some embodiments, the percentage of the mass of the silicon element in the second silicon-based material relative to the total mass of the second silicon-based material is any one of 45%, 47%, 49%, 51%, 53%, 55%, 57%, 59%, 61%, 63%, or 65%, or within a range formed by any two of the above values.

When the mass percentage of the silicon element in the second silicon-based material is within the above range, the capacity of the battery is favorably improved.

In some embodiments, the specific surface area of the second silicon-based material is greater than or equal to 0.8 m$^2$/g. In some embodiments, the specific surface area of the second silicon-based material is 1.1 m$^2$/g to 3.2 m$^2$/g.

In some embodiments, the specific surface area of the second silicon-based material is any one of 0.8 m$^2$/g, 1.1 m$^2$/g, 1.4 m$^2$/g, 1.7 m$^2$/g, 2 m$^2$/g, 2.3 m$^2$/g, 2.6 m$^2$/g, 2.9 m$^2$/g, or 3.2 m$^2$/g, or within a range formed by any two of the above values.

When the specific surface area of the second silicon-based material is within the above range, the mutual action between the binder and the silicon-based material can be enhanced, so that the expansion of the electrode plate is reduced.

In some embodiments, the second silicon-based material includes silicon crystalline grains, and the crystalline grain size of the silicon crystalline grains is smaller than or equal to 5 nm. In some embodiments, the crystalline grain size of the silicon crystalline grains is 2 nm to 3 nm.

In some embodiments, the crystalline grain size of the silicon crystalline grains is any one of 1 nm, 2 nm, 3 nm, 4 nm, or 5 nm, or within a range formed by any two of the above values.

The size of the silicon crystalline grains is within the above range, which can avoid the condition of deteriorating the storage performance and cycle stability of the battery caused by larger expansion during lithium intercalation due to excessive local enrichment of the silicon element because of too large size of the crystalline grains. The first silicon-based material and the second silicon-based material are used in a combined manner, so that the deterioration of the battery performance caused by the fact that silicon is easily enriched on the surface of the second silicon-based material with the small particle size to generate crystallization can be retarded.

In some embodiments, the second silicon-based material is subjected to a constant current charging and discharging test by using a button battery. A differential capacity curve at a delithiation stage is drawn to reflect a relationship between dQ/dV and a voltage V. According to the specification, a maximum value of a differential value dQ/dV between 0.27 V and 0.34 V is denoted as VA. A maximum value of a differential value dQ/dV between 0.43 V and 0.55 V is denoted as VB. 0.8≤VA/VB≤1.3. In some embodiments, 0.8≤VA/VB≤1.0.

In some embodiments, a value of VA/VB is any one of 0.8, 0.9, 1.0, 1.1, 1.2, or 1.3, or within a range formed by any two of the above values.

Silicon is easily enriched on the surface of the silicon-based material with the smaller particle size to generate crystallization, and a high-voltage platform is generated. The first silicon-based material and the second silicon-based material are used in a combined manner, so that the deterioration of the structure stability of the material caused by the high-voltage platform generated by the second silicon-based material can be retarded, and the storage performance and cycle stability of the battery are improved.

In some embodiments, a first carbon material is further included in the first region, and Dv50 of the first carbon material is 14 $\mu$m to 19 $\mu$m.

In some embodiments, Dv50 of the first carbon material is any one of 14 $\mu$m, 15 $\mu$m, 16 $\mu$m, 17 $\mu$m, 18 $\mu$m, or 19 $\mu$m, or within a range formed by any two of the above values.

In some embodiments, a second carbon material is further included in the second region, and the first carbon material and/or the second carbon material include/includes at least one of artificial graphite, natural graphite, soft carbon, and hard carbon.

In some embodiments, the first carbon material includes artificial graphite.

Compared with natural graphite, the artificial graphite can improve the compaction density of the electrode plate, and has excellent cycle stability and storage performance, so that the expansion of the electrode plate is reduced, and the cycle stability and storage performance of the battery are improved.

In some embodiments, the mass proportion of the first silicon-based material in the negative electrode film layer in the first region is smaller than the mass proportion of the second silicon-based material in the negative electrode film layer in the second region.

The proportion of the first silicon-based material in the first region in direct contact with the cold pressing roller and the electrolyte solution is low, and the content of the silicon in contact with the electrolyte solution when the silicon-based material cracks can be further reduced, so that the expansion of the electrode plate can be retarded, and the cycle stability and storage performance of the battery are improved.

In some embodiments, the negative electrode current collector may be a metal foil or a composite current collector. For example, a copper foil may be used as the metal foil. The composite current collector may include a polymer material substrate layer and a metal layer formed on at least one surface of the polymer material substrate. The composite current collector may be formed by forming a metal material (copper, copper alloy, nickel, nickel alloy, titanium, titanium alloy, silver, silver alloy, etc.) on the polymer material substrate (for example, a substrate of polypropylene (PP), polyethylene terephthalate (PET), polybutylene terephthalate (PBT), polystyrene (PS), polyethylene (PE), etc.).

In some embodiments, the negative electrode film layer further optionally includes a binder. The binder may be at least one of SBR (styrene-butadiene rubber), PAA (polyacrylic acid), PAAS (sodium polyacrylate), PAM (polyacrylamide), PVA (polyvinyl alcohol), SA (sodium alginate), PMAA (polymethacrylic acid), and CMCS (carboxymethyl chitosan).

In some embodiments, the negative electrode film layer further optionally includes a conductive agent. The conductive agent may be at least one of superconducting carbon, acetylene black, carbon black, Ketjen black, carbon dots, carbon nanotubes, graphene, and carbon nanofibers.

In some embodiments, the negative electrode film layer further optionally includes another additive, such as a thickener (for example, sodium carboxymethyl cellulose (CMC-Na)).

In some embodiments, the negative electrode plate may be prepared in the following manner. The above components for preparing the negative electrode plate, for example, the first silicon-based material, the first carbon material, the conductive agent, the binder, and any other components are dispersed into a solvent (such as deionized water) to form first negative electrode slurry. The second silicon-based material, the second carbon material, the conductive agent, the binder, and any other components are dispersed into a solvent (such as deionized water) to form second negative electrode slurry. By using a dual-cavity coating device, the first slurry and the second slurry are extruded at the same time. The second slurry is coated onto the copper foil of the negative electrode current collector, and the first slurry is coated onto the second slurry. Drying, cold pressing, and cutting are performed to obtain the negative electrode plate.

[Positive electrode plate]

A positive electrode plate generally includes a positive electrode current collector and a positive electrode film layer disposed on at least one surface of the positive electrode current collector. The positive electrode film layer includes a positive electrode active material.

As an example, the positive electrode current collector has two surfaces opposite in its own thickness direction. The positive electrode film layer is disposed on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material substrate layer and a metal layer formed on at least one surface of the polymer material substrate layer. The composite current collector may be formed by forming a metal material (aluminum, aluminum alloy, nickel, nickel alloy, titanium, titanium alloy, silver, silver alloy, etc.) on a polymer material substrate (for example, a substrate of PP (polypropylene), PET (polyethylene terephthalate), PBT (polybutylene terephthalate), PS (polystyrene), PE (polyethylene), etc.).

In some embodiments, the positive electrode active material may be a positive electrode active material used for batteries well known in the art. As an example, the positive electrode active material may include at least one of the following materials: lithium-containing phosphate of an olivine structure, lithium transition metal oxides, and their respective modified compounds. However, the present application is not limited to these materials, and other conventional materials capable of being used as a positive electrode active material for batteries may also be used. Only one or a combination of two or more of these positive electrode active materials may be used. The lithium transition metal oxide may exemplarily include but is not limited to at least one of a lithium-cobalt oxide (for example, $LiCoO_2$), a lithium-nickel oxide (for example, $LiNiO_2$), a lithium-manganese oxide (for example, $LiMnO_2$ or $LiMn_2O_4$), a lithium-nickel-cobalt oxide, a lithium-manganese-cobalt oxide, a lithium-nickel-manganese oxide, a lithium-nickel-cobalt-manganese oxide (for example, $LiNi_{1/3}Co_{1/3}Mn_{1/3}O_2$ (may also be called as $NCM_{333}$ for short), $LiNi_{0.5}Co_{0.2}Mn_{0.3}O_2$ (may also be called as $NCM_{523}$ for short), $LiNi_{0.5}Co_{0.25}Mn_{0.25}O_2$ (may also be called as $NCM_{211}$ for short), $LiNi_{0.6}Co_{0.2}Mn_{0.2}O_2$ (may also be called as $NCM_{622}$ for short), $LiNi_{0.8}Co_{0.1}Mn_{0.1}O_2$ (may also be called as $NCM_{811}$ for short), a lithium-nickel-cobalt-aluminum oxide (for example, $LiNi_{0.85}Co_{0.15}Al_{0.05}O_2$) and their modified compounds, etc. The lithium-containing phosphate of the olivine structure may exemplarily include but is not limited to at least one of a lithium iron phosphate (for example, $LiFePO_4$ (may also be called as LFP for short)), a composite material of the lithium iron phosphate and carbon, a lithium manganese phosphate (for example, $LiMnPO_4$), a composite material of the lithium manganese phosphate and carbon, a lithium iron manganese phosphate, and a composite material of the lithium manganese iron phosphate and carbon.

In some embodiments, the positive electrode film layer further optionally includes a binder. As an example, the binder may include at least one of PVDF (polyvinylidene fluoride), PTFE (polytetrafluoroethylene), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylic resin.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner. The above components for preparing the positive electrode plate, for example, the positive active material, the conductive agent, the binder, and any other components are dispersed into a solvent (for example, N-methylpyrrolidone) to form positive electrode slurry. The positive electrode slurry is coated onto the positive electrode current collector. After the work procedures of drying, cold pressing, etc., the positive electrode plate may be obtained.

[Electrolyte]

An electrolyte achieves an ion conducting effect between the positive electrode plate and the negative electrode plate. The type of the electrolyte is not specifically limited in the present application, and it may be selected according to requirements. For example, the electrolyte may be liquid, gelled, or all solid.

In some embodiments, the electrolyte is an electrolyte solution. The electrolyte solution includes an electrolyte salt and a solvent.

In some embodiments, the electrolyte solution includes an ester solvent.

In some embodiments, the ester solvent may be one or more selected from ethylene carbonate, propylidene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, and 1,4-butyrolactone.

In some embodiments, the electrolyte salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the electrolyte solution further optionally includes an additive. For example, the additive may include a negative electrode film-forming additive and a positive electrode film-forming additive, and may further include an additive capable of improving some properties of the battery, for example, an additive capable of improving the overcharge performance of the battery, an additive capable of improving the high-temperature or low-temperature performance of the battery, etc.

[Separator]

In some embodiments, the secondary battery further includes a separator. The type of the separator is not particularly limited in the present application, and any well-known separator of a porous structure having good chemical stability and mechanical stability may be selected and used.

In some embodiments, a material of the separator may be at least one selected from glass fiber, non-woven fabric, polyethylene, polypropylene, or polyvinylidene fluoride. The separator may be a single-layer film or a multilayer composite film without particular limitation. In a case that the separator is a multilayer composite film, materials of each layer may be the same or different without particular limitation.

In some embodiments, the positive electrode plate, the negative electrode plate, and the separator may be made into an electrode assembly by a winding process or a lamination process.

In some embodiments, the secondary battery may include an outer package. The outer package may be used for encapsulating the electrode assembly and electrolyte.

In some embodiments, the outer package of the secondary battery may be a hard shell, such as a hard plastic shell, an aluminum shell, and a steel shell. The outer package of the secondary battery may also be a soft package, such as a pouch-type soft package. A material of the soft package may be plastics, and examples of the plastics may include polypropylene, polybutylene terephthalate, polybutylene succinate, etc.

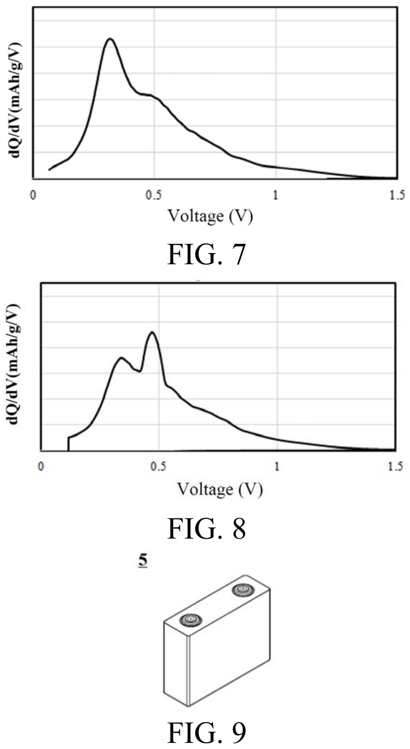

A shape of the secondary battery in the present application includes but is not limited to a cylindrical shape, a square shape, or any other shape. For example, FIG. 9 shows a secondary battery 5 of a square structure as an example.

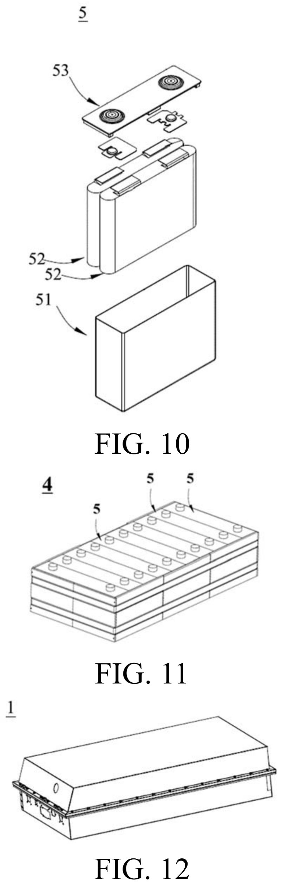

In some embodiments, referring to FIG. 10, the outer package may include a case 51 and a cover plate 53. The case 51 may include a bottom plate and a side plate connected to the bottom plate, and an accommodating cavity is defined by the bottom plate and the side plate. The case 51 is provided an opening communicating with the accommodating cavity, and the cover plate 53 may cover the opening to close the accommodating cavity. The positive electrode plate, the negative electrode plate, and the separator may be made to form an electrode assembly 52 by a winding process or a lamination process. The electrode assembly 52 is encapsulated in the accommodating cavity. An electrolyte solution infiltrates into the electrode assembly 52. The quantity of the electrode assembly 52 included in the secondary battery 5 may be one or more, and it may be selected by those skilled in the art according to specific practical requirements.

In some embodiments, the secondary battery may be assembled into a battery module. The quantity of the secondary battery included by the battery module may be one or more, and the specific quantity may be selected by those skilled in the art according to the application and capacity of the battery module.

FIG. 11 shows a battery module 4 as an example. Referring to FIG. 11, in the battery module 4, a plurality of secondary batteries 5 may be sequentially arranged in a length direction of the battery module 4. Certainly, the secondary batteries may also be arranged in any other manners. The plurality of secondary batteries 5 may further be fixed through a fastener.

Optionally, the battery module 4 may further include a shell with an accommodating space, and the plurality of secondary batteries 5 are accommodated in the accommodating space.

In some embodiments, the battery module may further be assembled into a battery pack, the quantity of battery modules included in the battery pack may be one or more, and the specific quantity may be selected by those skilled in the art according to the application and capacity of the battery pack.

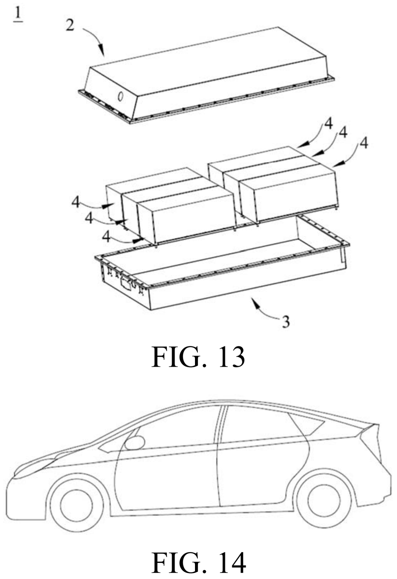

FIG. 12 and FIG. 13 show a battery pack 1 as an example. Referring to FIG. 12 and FIG. 13, the battery pack 1 may include a battery box and a plurality of battery modules 4 arranged in the battery box. The battery box includes an upper box body 2 and a lower box body 3. The upper box body 2 may cover the lower box body 3 to form a closed space for accommodating the battery modules 4. The plurality of battery modules 4 may be arranged in the battery box in any manner.

In addition, the present application further provides a power consuming apparatus. The power consuming apparatus includes at least one of the secondary battery, the battery module, or the battery pack provided in the present application. The secondary battery, the battery module, or the battery pack may be used as a power source of the power consuming apparatus, and may also be used as an energy storage unit of the power consuming apparatus. The power consuming apparatus may include but is not limited to a mobile device (for example, a mobile phone or a laptop), an electric vehicle (for example, an all-electric vehicle, a hybrid electric vehicle, a plug-in hybrid electric vehicle, an electric bicycle, an electric scooter, an electric golf cart, or an electric truck), an electric train, ship, and satellite, an energy storage system, etc.

The secondary battery, the battery module, or the battery pack may be selected according to use requirements of the power consuming apparatus.

FIG. 14 shows a power consuming apparatus as an example. The power consuming apparatus is an all-electric vehicle, a hybrid electric vehicle, or a plug-in hybrid electric vehicle, etc. In order to meet the requirements of the power consuming apparatus on high power and high energy density of the secondary battery, the battery pack or the battery module may be used.

The apparatus as another example may be a mobile phone, a tablet computer, a laptop, etc. The apparatus generally requires light weight and thin appearance, and the secondary battery may be used as a power source.

**Examples**

Examples of the present application will be described hereinafter. The following described examples are exemplary, and are merely intended to describe the present application but cannot be construed as a limitation to the present application. If the specific technology or conditions are not specified in the examples, the technology or conditions described in the literature in the art or the product manual shall be followed. The used reagents or instruments without manufacturer indicated are all conventional products that may be commercially available.

**I. Preparation method**

Preparation example 1: Spherical silicon-carbon material A

A gas including silane $SiH_4$ was introduced to spherical hard carbon particles having pore structures, and through chemical vapor deposition, silicon was deposited into the pore structures of the hard carbon particles. A mass ratio of the silicon of the silane to the hard carbon particles was 46:54, Dv50 of the hard carbon particles was 8.8 um, the porosity was 78.9%, and the average pore size was 2 nm. Then, a carbon layer accounting for 1% of the mass of the hard carbon particles after silicon deposition was coated onto the outer surfaces of the hard carbon particles by using chemical vapor deposition. A gas source was acetylene gas, and the spherical silicon-carbon material A was obtained. The average particle size of the spherical silicon-carbon material A was 9.5 $\mu$m, the mass percentage of silicon was 45.8%, the specific surface area was 1.56 m$^2$/g, and a value of V1/V2 in a differential capacity curve was 1.68. An X-ray diffraction pattern of the spherical silicon-carbon material A was as shown in FIG. 5. The differential capacity curve was as shown in FIG. 7.

Preparation example 2: Spherical silicon-carbon material B

A gas including silane SiH$_4$ was introduced to spherical hard carbon particles having pore structures, and through chemical vapor deposition, silicon was deposited into the pore structures of the hard carbon particles. A mass ratio of the silicon of the silane to the hard carbon particles was 47:53, Dv50 of the hard carbon particles was 4.3 um, the porosity was 80.1%, and the average pore size was 2 nm. Then, a carbon layer accounting for 1% of the mass of the hard carbon particles after silicon deposition was coated onto the outer surfaces of the hard carbon particles by using chemical vapor deposition. A gas source was acetylene gas, and the spherical silicon-carbon material B was obtained. The average particle size of the spherical silicon-carbon material B was 5.2 $\mu$m, the mass percentage of silicon was 46.3%, and the specific surface area was 2.31 m$^2$/g.

Preparation example 3: Blocky silicon-carbon material A

A gas including silane SiH$_4$ was introduced to blocky hard carbon particles having pore structures, and through chemical vapor deposition, silicon was deposited into the pore structures of the hard carbon particles. A mass ratio of the silicon of the silane to the hard carbon particles was 48:52, Dv50 of the hard carbon particles was 4.3 um, the porosity was 83.2%, and the average pore size was 2 nm. Then, a carbon layer accounting for 1% of the mass of the hard carbon particles after silicon deposition was coated onto the outer surfaces of the hard carbon particles by using chemical vapor deposition. A gas source was acetylene gas, and the blocky silicon-carbon material A was obtained. The average particle size of the blocky silicon-carbon material A was 5.2 $\mu$m, the mass percentage of silicon was 48.3%, the specific surface area was 2.67 m$^2$/g, and a value of V1/V2 in a differential capacity curve was 0.89. An X-ray diffraction pattern of the blocky silicon-carbon material A was as shown in FIG. 6. The differential capacity curve was as shown in FIG. 8. The blocky silicon-carbon material A included silicon crystalline grains, and the grain size of the silicon crystalline grains was 2.2 nm.

Preparation example 4: Blocky silicon-carbon material B

A gas including silane SiH$_4$ was introduced to blocky hard carbon particles having pore structures, and through chemical vapor deposition, silicon was deposited into the pore structures of the hard carbon particles. A mass ratio of the silicon of the silane to the hard carbon particles was 47:53, Dv50 of the hard carbon particles was 8.8 um, the porosity was 82.1%, and the average pore size was 2 nm. Then, a carbon layer accounting for 1% of the mass of the hard carbon particles after silicon deposition was coated onto the outer surfaces of the hard carbon particles by using chemical vapor deposition. A gas source was acetylene gas, and the blocky silicon-carbon material B was obtained. The average particle size of the blocky silicon-carbon material B was 9.5 $\mu$m, the mass percentage of silicon was 47.2%, and the specific surface area was 1.68 m$^2$/g.

Preparation example 5: Blocky silicon-carbon material C

A gas including silane SiH$_4$ was introduced to blocky hard carbon particles having pore structures, and through chemical vapor deposition, silicon was deposited into the pore structures of the hard carbon particles. A mass ratio of the silicon of the silane to the hard carbon particles was 46:54, Dv50 of the hard carbon particles was 8.8 um, the porosity was 80.5%, and the average pore size was 2 nm. Then, a carbon layer accounting for 1% of the mass of the hard carbon particles after silicon deposition was coated onto the outer surfaces of the hard carbon particles by using chemical vapor deposition. A gas source was acetylene gas, and the blocky silicon-carbon material C was obtained. The average particle size of the blocky silicon-carbon material C was 9.5 $\mu$m, the mass percentage of silicon was 46.1%, and the specific surface area was 1.63 m$^2$/g.

Example 1:

1) Preparation of negative electrode plate

A first negative electrode active material was prepared from the spherical silicon-carbon material A and artificial graphite (having the average particle size of 15.6 $\mu$m) according to a ratio of 0.16:0.84. The first negative electrode active material, a conductive agent of carbon nanotubes, a thickener of CMC-Na (sodium carboxymethyl cellulose), and a binder of SBR (styrene-butadiene rubber) were mixed according to a mass ratio of 96.7:0.5:1.0:1.8, deionized water was added, stirring was performed under the effect of a vacuum stirring machine till a system was in a uniform state, and first slurry was obtained.

A second negative electrode active material was prepared from the blocky silicon-carbon material A and natural graphite (having the average particle size of 18.6 $\mu$m) according to a ratio of 0.2:0.8. The second negative electrode active material, a conductive agent of carbon nanotubes, a thickener of CMC-Na (sodium carboxymethyl cellulose), and a binder of SBR (styrene-butadiene rubber) were mixed according to a mass ratio of 95.5:0.7:2.0:1.8, ionized water was added, stirring was performed under the effect of a vacuum stirring machine till a system was in a uniform state, and second slurry was obtained.

By using a dual-cavity coating device, the first slurry and the second slurry were extruded at the same time. The second slurry was coated onto the copper foil of the negative electrode current collector, and the first slurry was coated onto the second slurry. Drying, cold pressing, and cutting were performed to obtain the negative electrode plate. The coating weight of the first slurry and the second slurry were 4.2 mg/cm$^2$ and 6.3 mg/cm$^2$, respectively.

2) Preparation of positive electrode plate

A positive electrode active material of lithium iron phosphate, conductive carbon black, and a binder of PVDF (polyvinylidene fluoride) were sufficiently stirred to be uniformly mixed in an N-methylpyrrolidone solvent system according to a weight ratio of 96:2:2 to obtain positive electrode slurry. The obtained positive electrode slurry was uniformly coated onto an aluminum foil of a positive electrode current collector with the thickness of 13 $\mu$m, and the coating speed was 30 m/min. The temperature of a coating oven was 110°C to 130°C. Then, cold pressing and cutting were performed to obtain the positive electrode plate.

3) Preparation of electrolyte solution

In an argon gas atmosphere glove box (H$_2$O content <0.1 ppm, O$_2$ content <0.1 ppm), a lithium salt of LiPF$_6$ (lithium hexafluorophosphate) was dissolved into a mixed system of organic solvents of EC (ethylene carbonate) and DEC (diethyl carbonate) (a volume ratio of EC:DEC was 3:7), and uniform stirring was performed to obtain an electrolyte solution with the lithium salt concentration of 1 mol/L.

4) Separator

A polyethylene (PE) film of 9 $\mu$m was used as a separator.

5) Preparation of battery

The positive electrode plate, the separator, and the composite negative electrode plate were stacked sequentially, so that the separator was located between the positive electrode plate and the negative electrode plate to achieve an effect of separating the positive electrode plate from the negative electrode plate. A bare battery cell was obtained by winding. Tabs were welded. The battery cell was charged into an aluminum shell. Then, the electrolyte solution was immediately injected, and an opening was sealed. A lithium-ion secondary battery prepared in Example 1 was obtained through working procedures of still standing, cold pressing, formation, shaping, capacity test, etc.

A battery in Examples 2 to 3 had the same preparation method as the battery in Example 1. The difference was that the mass proportion of the first silicon-based material in the first region in the negative electrode active material and the mass proportion of the second silicon-based material in the second region in the negative electrode active material was adjusted. The specific parameters are as shown in Table 1.

A battery in Example 4 had a similar preparation method as the battery in Example 1. The difference was that the first carbon material was natural graphite with the particle size of 18.6 um. The specific parameters are as shown in Table 1.

A battery in Examples 5 to 7 had a similar preparation method as the battery in Example 1. The difference was that the type of the spherical silicon-carbon material in the first region and/or the type of the blocky silicon-carbon material in the second region were/was adjusted. The specific parameters are as shown in Table 1.

A battery in Comparative example 1 had a similar preparation method as the battery in Example 1. The difference was that the first silicon-based material was the blocky silicon-carbon material C. The specific parameters are as shown in Table 1.

Table 1

| Sequence number | Negative electrode plate | | | | |
| | First region | | First carbon material | Second region | |
| | First silicon-based material | | | Second silicon-based material | |
| | Type | Mass proportion in negative electrode active material | | Type | Mass proportion in negative electrode active material |
|---|---|---|---|---|---|
| Example 1 | Spherical silicon-carbon material A | 16% | Artificial graphite | Blocky silicon-carbon material A | 20% |
| Example 2 | Spherical silicon-carbon material A | 4% | Artificial graphite | Blocky silicon-carbon material A | 6% |
| Example 3 | Spherical silicon-carbon material A | 23% | Artificial graphite | Blocky silicon-carbon material A | 39% |
| Example 4 | Spherical silicon-carbon material A | 16% | Natural graphite | Blocky silicon-carbon material A | 20% |
| Example 5 | Spherical silicon-carbon material A | 16% | Artificial graphite | Blocky silicon-carbon material B | 20% |
| Example 6 | Spherical silicon-carbon material B | 16% | Artificial graphite | Blocky silicon-carbon material A | 20% |
| Example 7 | Spherical silicon-carbon material B | 16% | Artificial graphite | Blocky silicon-carbon material B | 20% |
| Comparative example 1 | Blocky silicon-carbon material C | 16% | Artificial graphite | Blocky silicon-carbon material A | 20% |

**II. Test method**

1. Charging time test

The electrode plate might be made into a button battery or a small stacked battery cell. At 35°C, the battery was subjected to first charging and discharging at a current of 1 C (that is, the current value at which the theoretical capacity was completely discharged within 1 h). The following steps were specifically included. The battery was subjected to 1 C constant current charging till a charging cut-off voltage was 2 V. Then, constant voltage charging was performed till the current ≤0.05 C. Still standing was performed for 5 min. Then, 0.33 C constant current discharging was performed till a discharging cut-off voltage was 5 mV. Its actual capacity was denoted as C0. Then, the battery was sequentially subjected to 2.8C0, 3C0, 3.2C0, 3.5C0, 3.8C0, 4.1C0, 4.4C0, 4.7C0, 5C0, 5.3C0, 5.6C0, and 5.9C0 constant current charging till a whole battery charging cut-off voltage V1 or a 0V negative electrode stopping potential was reached (whichever reached first). After the charging was completed in each time, 1C0 discharging was needed till a whole battery discharging cut-off voltage V2 was reached. A negative electrode potential corresponding to the charging at different charging rate to 10%, 20%, 30%, ..., 80% SOC (state of charge) was recorded. A charging rate-negative electrode potential curve in different SOCs was drawn. The charging rate corresponding to the negative electrode potential of 0V at different SOCs was obtained after linear fitting. The charging rate was a charging window at this SOC, and they were respectively denoted as C10%SOC, C20%SOC, C30%SOC, C40%SOC, C50%SOC, C60%SOC, C70%SOC, and C80%SOC. According to a formula:

(60/C20%SOC+60/C30%SOC+60/C40%SOC+60/C50%SOC+60/C60%SOC+6 0/C70%SOC+60/C80%SOC)×10%,

calculation was performed to obtain a charging time T of the battery charged from 10%SOC to 80%SOC, and the unit was min. A shorter time indicated better fast charging performance of the battery.

2. Expansion test based on fully charging of cold pressed electrode plate

After the cold pressing of the negative electrode plate, the thicknesses of 5 to 8 points of the electrode plate were measured by using a micrometer caliper. An average value was taken and was denoted as A1. The battery was charged to 4.25 V. Then, constant voltage charging was performed till the current ≤0.05 C. The negative electrode plate was dismounted from the battery cell after being charged. The thicknesses of 5 to 8 points of the dismounted electrode plate were measured. An average value was taken and was denoted as A2. A fully charging expansion rate of the electrode plate was (A2-A1)/A1*100%.

3. Storage performance test

The electrode plate was made into a stacked battery cell. The battery was subjected to 0.33 C constant current discharging to reach a cut-off voltage of 2.5 V. Still standing was performed for 30 min. Then, the battery was subjected to 0.33 C constant current charging to reach a charging cut-off voltage of 4.25 V. Then, the battery was subjected to constant voltage charging till the current ≤0.05 C. Still standing was performed for 30 min, and the initial capacity was recorded as C0. The battery was placed into a 60°C incubator to be stored for 60 days. After 60 days, the battery was taken out and was subjected to still standing at room temperature for 60 min. A specific process of capacity test was as follows. 0.33 C constant current discharging was performed to reach a cut-off voltage of 2.5 V. Still standing was performed for 30 min. Then, 0.33 C constant current charging was performed to reach a charging cut-off voltage of 4.25 V. Next, constant voltage charging was performed till the current ≤0.05 C. The capacity was recorded as C1, and the capacity retention rate after 60 days was C1/C0*100%.

4. Cycle performance test at normal temperature

Test flow process. At 25°C, the battery was subjected to still standing for 30 min, was then subjected to 0.5 C charging to reach a voltage of 4.2 V, and was further subjected to 4.2 V constant voltage charging to reach the current of 0.05 C. Still standing was performed for 5 min. Next, the battery was subjected to 0.5 C discharging to a voltage of 2.8 V. The obtained capacity was recorded as an initial capacity C0. This was a charging and discharging cycle process. The above steps were repeated on the same above battery, and the discharging capacity Cn was recorded in each cycle, so the battery capacity retention rate after each cycle met Pn=Cn/C0*100%, the test was stopped till Pn≦80%, and the number of cycles at this moment was recorded.

### III. Analysis of test results of examples and comparative examples

The batteries of each example and each comparative example were respectively prepared according to the above methods, and each performance parameter was measured. The results are shown in tables below.
From Table 2, it can be seen that the shape of the silicon-based material in the first region of the negative electrode film layer is in a spherical shape, the expansion rate of the cold pressed electrode plate can be reduced, and the high-temperature storage performance and cycle stability of the battery can be improved.

Table 2

| Sequence number | Battery performance | | | |
| --- | --- | --- | --- | --- |
| | Expansion rate based on fully charging of cold pressed electrode plate (%) | Capacity retention rate after high-temperature storage for 60 days (%) | Charging time/min | Number of cycles |
| Example 1 | 35.5 | 94.2 | 13.5 | 1300 |
| Comparative example 1 | 41.5 | 93.4 | 13.9 | 1100 |

Through comparison between Example 1 and Example 4 in Table 3, it can be seen that compared with natural graphite, the first graphite being artificial graphite is favorable for improving the high-temperature storage performance, dynamic performance and cycle stability of the battery.

Through comparison among Example 1 and Examples 5 to 7 in Table 3, it can be seen that the first silicon-based material with the big particle size is matched with the second silicon-based material with the small particle size to be used, the electrode plate has a low expansion rate, the battery has good cycle stability, high-temperature storage performance and fast charging performance at the same time.

Table 3

| Sequence number | Battery performance | | | |
|---|---|---|---|---|
| | Expansion rate based on fully charging of cold pressed electrode plate (%) | Capacity retention rate after high-temperature storage for 60 days (%) | Charging time/min | Number of cycles |
| Example 1 | 35.5 | 94.2 | 13.5 | 1300 |
| Example 2 | 26.5 | 97.5 | 15.6 | 1700 |
| Example 3 | 49.8 | 92.3 | 20.2 | 900 |
| Example 4 | 35.9 | 93.4 | 14.3 | 1100 |
| Example 5 | 37.1 | 95 | 14.9 | 1300 |
| Example 6 | 32.2 | 92.1 | 12 | 1000 |
| Example 7 | 36.2 | 92.8 | 12.5 | 1100 |

It should be noted that the present application is not limited to the above embodiments. The above embodiments are merely exemplary, and embodiments having substantially the same technical idea and the same effects within the scope of the technical solution of the present application are all included in the technical scope of the present application. In addition, other embodiments constructed by applying various modifications conceivable to those skilled in the art to the embodiments and combining some of the constituent elements of the embodiments without departing from the scope of the essence of the present application are also included in the scope of the present application.

**Claims**

1.    A negative electrode plate, comprising a negative electrode current collector and a negative electrode film layer formed on at least one surface of the negative electrode current collector, wherein the negative electrode film layer has a first surface away from the negative electrode current collector and a second surface opposite to the first surface, a thickness of the negative electrode film layer is denoted as H, a region within the thickness range from the first surface to 0.3 H of the negative electrode film layer is denoted as a first region of the negative electrode film layer, a region within the thickness range from the second surface to 0.3 H of the negative electrode film layer is denoted as a second region of the negative electrode film layer, and the first region comprises a spherical or/and spheroidal first silicon-based material.

2.    The negative electrode plate according to claim 1, wherein the second region comprises a second silicon-based material, and an average particle size of the second silicon-based material is smaller than an average particle size of the first silicon-based material.

3.    The negative electrode plate according to claim 2, wherein a percentage of the mass of a silicon element in the first silicon-based material relative to the total mass of the first silicon-based material is smaller than a percentage of the mass of a silicon element in the second silicon-based material relative to the total mass of the second silicon-based material.

4.    The negative electrode plate according to claim 2 or 3, wherein a specific surface area of the first silicon-based material is smaller than a specific surface area of the second silicon-based material.

5.    The negative electrode plate according to any one of claims 2 to 4, wherein the crystallinity of the first silicon-based material is smaller than the crystallinity of the second silicon-based material.

6.    The negative electrode plate according to any one of claims 1 to 5, wherein the first silicon-based material is subjected to a constant current charging and discharging test by using a button battery, a differential capacity curve at a delithiation stage is drawn to reflect a relationship between dQ/dV and a voltage V, according to a specification, a maximum value of a differential value dQ/dV between 0.27 V and 0.34 V is denoted as V1, a maximum value of a differential value dQ/dV between 0.43 V and 0.55 V is denoted as V2, $1.55 \leq V1/V2 \leq 1.75$, and optionally, $1.60 \leq V1/V2 \leq 1.72$.

7. The negative electrode plate according to any one of claims 2 to 6, wherein the first silicon-based material and/or the second silicon-based material comprise/comprises a silicon-carbon material, and the silicon-carbon material comprises carbon matrix particles having pore structures, and a nanometer silicon-based material arranged in the pore structures.

8. The negative electrode plate according to any one of claims 1 to 7, wherein the first silicon-based material meets at least one of the followings:

(1) Dv50 of the first silicon-based material is 9 $\mu$m to 11 $\mu$m, and is optionally 9.5 $\mu$m to 10 $\mu$m;
(2) the percentage of the mass of the silicon element in the first silicon-based material relative to the total mass of the first silicon-based material is 40% to 60%, and is optionally 45% to 50%; and
(3) the specific surface area of the first silicon-based material is 0.8 m$^2$/g to 5 m$^2$/g, and is optionally 1.1 m$^2$/g to 3.2 m$^2$/g.

9. The negative electrode plate according to any one of claims 2 to 8, wherein the second silicon-based material meets at least one of the followings:

(1) the second silicon-based material has a blocky appearance;
(2) Dv50 of the second silicon-based material is 5 $\mu$m to 6 $\mu$m, and is optionally 5.2 $\mu$m to 5.6 $\mu$m;
(3) the percentage of the mass of the silicon element in the second silicon-based material relative to the total mass of the second silicon-based material is 45% to 65%, and is optionally 47% to 55%;
(4) the specific surface area of the second silicon-based material is greater than or equal to 0.8 m$^2$/g, and is optionally 1.1 m$^2$/g to 3.2 m$^2$/g;
(5) the second silicon-based material comprises silicon crystalline grains, and a crystalline grain size of the silicon crystalline grains is smaller than or equal to 5 nm, and is optionally 2 nm to 3 nm; and
(6) the second silicon-based material is subjected to a constant current charging and discharging test by using a button battery, a differential capacity curve at a delithiation stage is drawn to reflect a relationship between dQ/dV and a voltage V, according to the specification, a maximum value of a differential value dQ/dV between 0.27 V and 0.34 V is denoted as VA, a maximum value of a differential value dQ/dV between 0.43 V and 0.55 V is denoted as VB, $0.8 \leq VA/VB \leq 1.3$, and optionally, $0.8 \leq VA/VB \leq 1.0$.

10. The negative electrode plate according to any one of claims 1 to 9, wherein a first carbon material is further comprised in the first region, and Dv50 of the first carbon material is 14 $\mu$m to 19 $\mu$m.

11. The negative electrode plate according to claim 10, wherein a second carbon material is further comprised in the second region, and the first carbon material and/or the second carbon material comprise/comprises at least one of artificial graphite, natural graphite, soft carbon, and hard carbon.

12. The negative electrode plate according to claim 10 or 11, wherein the first carbon material comprises artificial graphite.

13. The negative electrode plate according to any one of claims 2 to 12, wherein a mass proportion of the first silicon-based material in the negative electrode film layer in the first region is smaller than a mass proportion of the second silicon-based material in the negative electrode film layer in the second region.

14. A secondary battery, comprising the negative electrode plate according to any one of claims 1 to 13.

15. A power consuming apparatus, comprising the secondary battery according to claim 14.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

## INTERNATIONAL SEARCH REPORT

| International application No. |
| --- |
| **PCT/CN2024/093391** |

### A. CLASSIFICATION OF SUBJECT MATTER

H01M4/133(2010.01)i; H01M4/134(2010.01)i; H01M4/36(2006.01)i

According to International Patent Classification (IPC) or to both national classification and IPC

### B. FIELDS SEARCHED

Minimum documentation searched (classification system followed by classification symbols)

IPC: H01M4/-

Documentation searched other than minimum documentation to the extent that such documents are included in the fields searched

Electronic data base consulted during the international search (name of data base and, where practicable, search terms used)

CNTXT, ENTXTC, DWPI, CJFD, ISI_Web of Science: 负极, 极片, 集流体, 活性物质, 活性材料, 硅基, 硅氧, 硅碳, 第一, 第二, 人造石墨, 粒径, 微分值, negative electrode sheet, current collector, active material, silicon, Si, second, diameter

### C. DOCUMENTS CONSIDERED TO BE RELEVANT

| Category* | Citation of document, with indication, where appropriate, of the relevant passages | Relevant to claim No. |
| --- | --- | --- |
| X | CN 116864643 A (LANXI ZHIDE NEW ENERGY MATERIALS CO., LTD.) 10 October 2023 (2023-10-10) description, paragraphs 34, 36, and 94-97, and embodiment 1 | 1, 8, 10, 11, 14, 15 |
| Y | CN 116864643 A (LANXI ZHIDE NEW ENERGY MATERIALS CO., LTD.) 10 October 2023 (2023-10-10) description, paragraphs 34, 36, and 94-97, and embodiment 1 | 1-15 |
| Y | CN 116868395 A (CONTEMPORARY AMPEREX TECHNOLOGY CO., LTD.) 10 October 2023 (2023-10-10) description, paragraphs 84-85, and embodiment E1, and figure 1 | 1-15 |
| Y | CN 117096330 A (CONTEMPORARY AMPEREX TECHNOLOGY CO., LTD.) 21 November 2023 (2023-11-21) description, paragraphs 5-8 | 6, 7 |
| X | CN 114335687 A (HENGDIAN GROUP DMEGC MAGNETICS CO., LTD.) 12 April 2022 (2022-04-12) description, embodiment 1 | 1, 8, 10-12, 14, 15 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 July 2024** | **18 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/093391** |

### C.    DOCUMENTS CONSIDERED TO BE RELEVANT

| Category* | Citation of document, with indication, where appropriate, of the relevant passages | Relevant to claim No. |
| --- | --- | --- |
| Y | CN 114335687 A (HENGDIAN GROUP DMEGC MAGNETICS CO., LTD.) 12 April 2022 (2022-04-12) <br> description, embodiment 1 | 6 |
| A | CN 116964770 A (CONTEMPORARY AMPEREX TECHNOLOGY CO., LTD.) 27 October 2023 (2023-10-27) <br> entire document | 1-15 |
| A | US 2023207786 A1 (CONTEMPORARY AMPEREX TECHNOLOGY CO., LTD.) 29 June 2023 (2023-06-29) <br> entire document | 1-15 |

## INTERNATIONAL SEARCH REPORT
### Information on patent family members

International application No.

**PCT/CN2024/093391**

| Patent document cited in search report | | | Publication date (day/month/year) | Patent family member(s) | | | Publication date (day/month/year) |
|---|---|---|---|---|---|---|---|
| CN | 116864643 | A | 10 October 2023 | None | | | |
| CN | 116868395 | A | 10 October 2023 | None | | | |
| CN | 117096330 | A | 21 November 2023 | None | | | |
| CN | 114335687 | A | 12 April 2022 | None | | | |
| CN | 116964770 | A | 27 October 2023 | None | | | |
| US | 2023207786 | A1 | 29 June 2023 | JP | 2024504525 | A | 01 February 2024 |
| | | | | KR | 20230106127 | A | 12 July 2023 |
| | | | | WO | 2023122890 | A1 | 06 July 2023 |
| | | | | EP | 4228042 | A1 | 16 August 2023 |
| | | | | EP | 4228042 | A4 | 13 September 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311640889